# EUROPÄISCHE PATENTANMELDUNG

(11) **EP 4 636 576 A1**
(43) Veröffentlichungstag der Anmeldung: **22.10.2025**
(21) Anmeldenummer: 24170798.3
(22) Anmeldetag: 17.04.2024
(51) Int. Cl.: G06F 8/33, G06F 8/36, G06N 20/00

(54) **AUTOMATISIERTE GENERIERUNG VON PROGRAMMCODE DURCH ZERLEGEN IN TEILFUNKTIONEN UND KOMBINIEREN VON EXISITIERENDEN PROGRAMMBAUSTEINE AUS BIBLIOTHEKEN UNTER VERWENDUNG VON KÜNSTLICHER INTELLIGENZ**

(71) Anmelder: Siemens Aktiengesellschaft, 80333 München (DE)
(72) Erfinder: Hartwig, Anton, 92342 Freystadt (DE)
(74) Vertreter: Siemens Patent Attorneys

(57) **Zusammenfassung**

Die Erfindung betrifft ein Verfahren, insbesondere computergestütztes Verfahren, zum Generieren eines Programmcodes für ein System, umfassend die folgenden Schritte:
- Definieren der Gesamtfunktion des Systems, welche in einem Programmcode abgebildet werden soll;
- Zerlegen der Gesamtfunktion in Einzelfunktionen unter Zugriff auf eine Datenbank, in welcher eine Vielzahl verschiedener Einzelfunktionen abgebildet sind;
- Zugreifen auf Programmbausteine, die in der Datenbank hinterlegt sind und die jeweilige Einzelfunktion abbilden, oder Erstellen von Programmbausteinen, welche die jeweilige Einzelfunktion abbilden, insbesondere unter Verwendung einer künstlichen Intelligenz;
- automatisiertes Erstellen eines Programmcodes für das System durch Kombinieren der jeweils den Einzelfunktionen zugeordneten Programmbausteinen.

Des Weiteren betrifft die Erfindung ein Computerprogrammprodukt sowie ein computerlesbares Medium.

## Beschreibung

Die vorliegende Erfindung betrifft ein Verfahren, insbesondere ein computergestütztes Verfahren, zum Generieren eines Programmcodes für ein System. Ferner betrifft die Erfindung ein Computerprogrammprodukt und ein computerlesbares Medium.

Industrieprozesse unterliegen einem ständigen Rationalisierungsdruck. Eine wichtige Rolle spielt dabei die zunehmende Automatisierung von Industrieprozessen, beispielsweise bei der Herstellung von Produkten. Hierzu existieren Automatisierungssysteme, beispielsweise speicherprogrammierbare Steuerungen, die vielseitig einsetzbar und flexibel programmierbar sind. Üblicherweise besitzen solche Steuerungen eine Rechnereinheit, einen Speicher und diverse Eingänge und Ausgänge für digitale und/oder analoge Signale.

Gerade bei komplexen Steuerungsaufgaben ist es notwendig, relativ umfangreiche Programmcodes zu erstellen, um ein System oder eine Anlage zu steuern. Diese werden in der Regel manuell geschrieben, d.h. durch einen Programmierer eingegeben. Hierzu werden verschiedene Programmiersprachen verwendet. Ein Beispiel dafür ist die Programmiersprache SCL.

Durch die Nutzung künstlicher Intelligenz besteht zunehmend die Möglichkeit, Texte automatisiert erstellen zu lassen. Diese Perspektive hält auch Einzug in das Erstellen von Programmcodes. Eine solche künstliche Intelligenz, welche über ein Large Language Model (LLM) umgesetzt werden kann, ermöglicht nach Vorgaben das automatisierte Erstellen von Texten und damit auch von Programmcodes. Als Large Language Model kommt beispielsweise ChatGPT infrage.

Es hat sich jedoch herausgestellt, dass bei komplexeren Programmen, welche häufig bei Automatisierungsaufgaben erforderlich sind, ein automatisiertes Erstellen des Programmcodes noch nicht möglich ist. Hier kann es beispielsweise vorkommen, dass die künstliche Intelligenz Funktionen erfindet, die bei dem betreffenden System überhaupt nicht existieren. Häufig ist ein solcher Programmcode bei einem komplexeren System fehlerhaft und damit nicht zu verwenden.

Vor diesem Hintergrund besteht die Aufgabe der vorliegenden Erfindung darin, ein alternatives Verfahren zum Generieren eines Programmcodes für ein System zu schaffen, welches insbesondere die zuvor genannten Nachteile vermeidet.

Die Aufgabe ist bei einem Verfahren, insbesondere computergestützten Verfahren, zum Generieren eines Programmcodes für ein System dadurch gelöst, dass es die folgenden Schritte umfasst:
- Definieren der Gesamtfunktion des Systems, welche in einem Programmcode abgebildet werden soll;
- Zerlegen der Gesamtfunktion in Einzelfunktionen unter Zugriff auf eine Datenbank, in welcher eine Vielzahl verschiedener Einzelfunktionen abgebildet sind;
- Zugreifen auf Programmbausteine, die in der Datenbank hinterlegt sind und die jeweilige Einzelfunktion abbilden, oder Erstellen von Programmbausteinen, welche die jeweilige Einzelfunktion abbilden, insbesondere unter Verwendung einer künstlichen Intelligenz;
- automatisiertes Erstellen eines Programmcodes für das System durch Kombinieren der jeweils den Einzelfunktionen zugeordneten Programmbausteinen.

Der Erfindung liegt die grundsätzliche Überlegung zugrunde, zunächst die Gesamtfunktion des Systems zu definieren. Um zu vermeiden, dass ein Programmcode direkt erstellt werden muss, welcher die Gesamtfunktion vollständig abbildet, wird in einem ersten Schritt die Gesamtfunktion in eine Vielzahl von Einzelfunktionen zerlegt. Konkret kann dies unter Zugriff auf eine Datenbank geschehen, in welcher eine Vielzahl von Einzelfunktionen abgebildet sind. Für jede Einzelfunktion ist ein Programmbaustein vorgesehen. Dieser kann in der Datenbank hinterlegt sein oder bei Bedarf individuell erstellt werden. Hierzu kann insbesondere eine künstliche Intelligenz verwendet werden. Ausgehend von den einzelnen Programmbausteinen kann dann praktisch bottom-up ein Programmcode für das Gesamtsystem erstellt werden.

Bevorzugt erfolgt das Definieren der Gesamtfunktion durch die Eingabe eines Bedieners, insbesondere durch eine Fließtexteingabe eines Bedieners. Das Zerlegen der Gesamtfunktion in Einzelfunktionen kann unter Verwendung einer künstlichen Intelligenz stattfinden. Hierzu kann z.B. ein Prompt bereitgestellt werden. Mit anderen Worten wird durch diesen Schritt ein komplexes Problem in einzelne kleinere Probleme zerlegt.

Das Zerlegen der Gesamtfunktion in Einzelfunktionen kann in mehreren Schritten stattfinden und/oder so lange wiederholt werden, bis jede erhaltene Einzelfunktion in der Datenbank abgebildet ist. Diese Ausgestaltung basiert auf der Überlegung, dass bei komplexen Gesamtfunktionen eine Zerlegung in Einzelfunktionen, zu denen Programmbausteine vorliegen oder auf einfache Weise erstellt werden können, nicht in einem Schritt stattfinden kann, sondern eine mehrfache, rekursive Zerlegung erforderlich ist, um am Ende auf Einzelfunktionen zu kommen, die praktisch Grundfunktionen der jeweiligen Programmiersprache darstellen, die durch Programmbausteine in der Datenbank abgebildet werden. Die Zerlegung in Einzelfunktionen kann unter Verwendung einer künstlichen Intelligenz stattfinden.

In konkreter Ausgestaltung kann die Datenbank als Bibliothek aufgebaut sein. Jeder Einzelfunktion kann dabei ein Dokument zugeordnet sein. Dieses Dokument kann einen standardisierten Aufbau aufweisen. Jedes Dokument kann eine Beschreibung der jeweiligen Einzelfunktion enthalten. Dies kann beispielsweise in einem Fließtext vorliegen. Möglich ist auch, dass jedes Dokument weitere Informationen betreffend die jeweilige Einzelfunktion enthält. Hierbei kann es sich beispielsweise um Parameter oder Variablen handeln, die für die Abbildung der jeweiligen Einzelfunktion erforderlich sind. Auch kann jedes Dokument Kommentare enthalten, die für einen Programmierer relevant sind.

In weiterer Ausgestaltung kann jedes Dokument einen Programmbaustein enthalten, welcher die jeweilige Einzelfunktion abbildet. Dieser Programmbaustein kann durch einen standardisierten Prompt bereitgestellt oder als ein solcher erzeugt werden. Der Programmbaustein kann unter Verwendung einer künstlichen Intelligenz erzeugt werden oder erzeugt worden sein.

Gemäß einer bevorzugten Ausgestaltung der Erfindung kann jedes Dokument eine Benutzerfrage enthalten. Eine solche Benutzerfrage kann beispielsweise am Ende des Dokumentes sein. Wird ein Programmbaustein durch einen standardisierten Prompt bereitgestellt, kann der Prompt jeweils Anweisungen und eine Benutzerfrage enthalten. Hierbei kann es sich um ein standardisiertes Format handeln, auf welche dann eine künstliche Intelligenz zugreifen kann.

Das Dokument bzw. der standardisierte Prompt kann auch eine Hilfe enthalten. Hier können Hintergrundinformationen zu der jeweiligen Einzelfunktion abgelegt sein. Daraus kann beispielsweise eine künstliche Intelligenz beim automatisierten Erstellen eines Programmcodes Informationen entnehmen.

Das automatisierte Erstellen eines Programmcodes kann unter Verwendung von künstlicher Intelligenz stattfinden. Mit anderen Worten kann unter Verwendung künstlicher Intelligenz aus den Einzelfunktionen ein durchgängig schlüssiger Programmcode, welcher letztlich die Gesamtfunktion des Systems abbildet, erstellt werden.

Als künstliche Intelligenz kann hier beispielsweise ChatGPT, insbesondere ChatGPT 3.5 oder ChatGPT 4.0, verwendet werden. Prinzipiell kommen auch andere Large Language Models infrage.

Der erstellte Programmcode kann zum Steuern einer Anlage, insbesondere einer Industrieanlage, oder eines Teils einer Anlage oder eines industriellen Prozesses verwendet werden.

Die Erfindung schafft ferner ein Computerprogrammprodukt umfassend Befehle, die bei der Ausführung des Programms durch einen Computer diesen veranlassen, das Verfahren wie zuvor beschrieben auszuführen.

Ferner schafft die Erfindung ein computerlesbares Medium, insbesondere ein Speichermedium, auf welchem das zuvor beschriebene Computerprogrammprodukt gespeichert ist.

Für die weitere Ausgestaltung der Erfindung wird auf die Unteransprüche und auf die nachfolgende Beschreibung eines Ausführungsbeispiels unter Bezugnahme auf die Zeichnung verwiesen. In der Zeichnung zeigen:
Figur 1 den schematischen Ablauf des erfindungsgemäßen Verfahrens;
Figur 2 das Zerlegen der Gesamtfunktion in Einzelfunktionen anhand eines Beispiels in einer schematischen Darstellung.

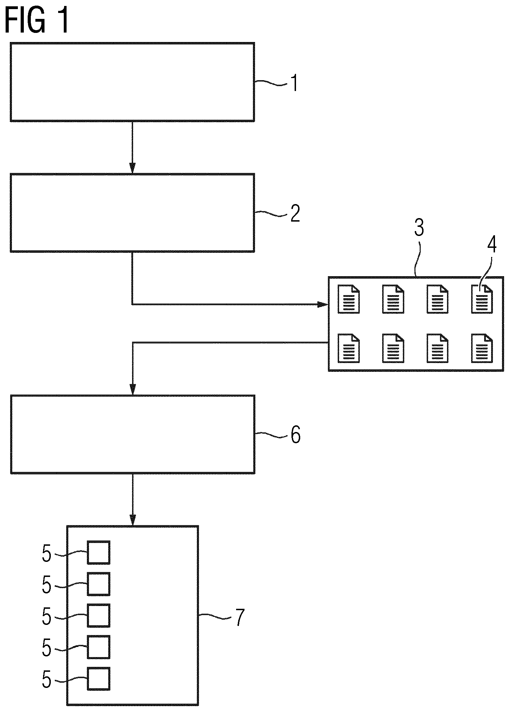

Die Figur 1 zeigt schematisch den Ablauf eines erfindungsgemäßen Verfahrens 1. In einem ersten Schritt 1 wird eine Gesamtfunktion des Systems definiert. Dies geschieht durch die Fließtexteingabe einer Frage durch einen Bediener.

In einem nächsten Schritt 2 wird diese Gesamtfunktion in eine Vielzahl von Einzelfunktionen zerlegt. Hierzu wird auf eine Datenbank 3 zugegriffen, in welcher eine Vielzahl verschiedener Einzelfunktionen praktisch lexikonartig abgelegt ist. Die Datenbank 3 ist dabei als Bibliothek aufgebaut, wobei jeder Einzelfunktion ein Dokument 4 zugeordnet ist. Jedes Dokument 4 enthält eine Beschreibung der jeweiligen Einzelfunktion und einen Programmbaustein, welcher die jeweilige Einzelfunktion abbildet. Darüber hinaus enthält jedes Dokument 4 eine Benutzerfrage.

In konkreter Ausgestaltung können die Programmbausteine 5, welche jeweils eine Einzelfunktion abbilden, durch einen standardisierten Prompt bereitgestellt oder als ein solcher erzeugt werden. Der Prompt enthält jeweils Anweisungen und eine Benutzerfrage.

Unter Verwendung einer künstlichen Intelligenz 6, beispielsweise ChatGPT, wird automatisiert ein Programmcode für das System durch Kombinieren der jeweils den Einzelfunktionen zugeordneten Programmbausteinen erstellt. Der Programmcode 7 ist schematisch mit den einzelnen Programmbausteinen 5 dargestellt.

Die Datenbank 3 ist vorliegend als Vektor-Datenbank ausgebildet. Hierbei kann es sich um ein Retrieval-System handeln, wodurch eine Eingabe der Beschreibung der Funktion genügt, um einen richtigen Programmbaustein 5 bzw. ein Dokument 4 herauszusuchen.

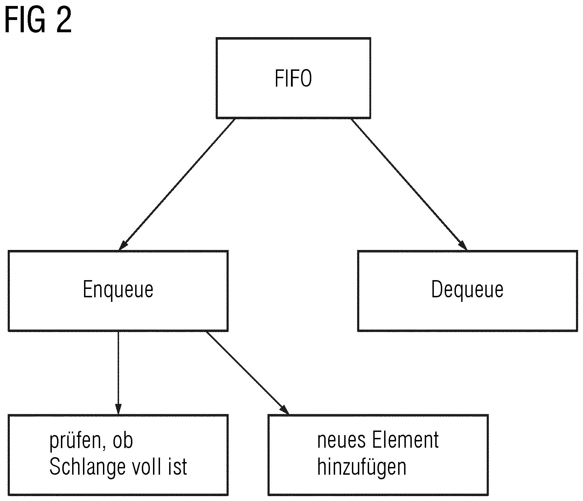

Die Figur 2 zeigt schematisch die Zerlegung der Gesamtfunktion in Einzelfunktionen anhand des Beispiels eines First-In-First-Out-Speichers. Ein solcher Speicher ist dadurch gekennzeichnet, dass Vorgänge bzw. Gegenstände zeitlich nacheinander abgearbeitet werden. Dementsprechend wird das am längsten wartende Element als nächstes bearbeitet. Mit anderen Worten ist ein solcher Speicher eine spezielle Art, Daten abzulegen und wieder abzurufen. Elemente in einer Schlange werden genau in der Reihenfolge abgerufen, in der sie abgelegt wurden.

Dementsprechend wird auf die Frage, welche Funktionen erforderlich sind, um einen FIFO-Speicher zu programmieren, in einem ersten Schritt die Gesamtfunktion zerlegt in eine Einzelfunktion "Enqueue", die ein neues Element in die Schlange einfügt. Mit anderen Worten handelt es sich hier um eine Funktion, um ein Element in den FIFO-Speicher einzufügen.

Eine weitere Funktion ist die "Dequeue"-Funktion, welche das jeweils älteste FIFO-Speicher entfernt.

Die "Enqueue"-Funktion wird weiter zerlegt in eine Einzelfunktion, welche überprüft, ob die Schlange voll ist. Wenn die Schlange voll ist, muss zunächst das älteste Element aus der Schlange entfernt werden. Eine weitere Einzelfunktion dient dazu, das neue Element am Ende der Schlange hinzuzufügen.

Dieses Ausführungsbeispiel zeigt beispielhaft das Zerlegen der Gesamtfunktion in Einzelfunktionen unter Zugriff auf eine Datenbank 3. Dies kann konkret geschehen durch das gezielte Stellen von Fragen, beispielsweise mit welcher Funktion ein bestimmter Vorgang programmiert bzw. abgebildet werden kann.

Im nächsten Schritt erfolgt dann ein Zugreifen auf Programmbausteine 5, die in der Datenbank 3 hinterlegt sind und die jeweiligen Einzelfunktionen abbilden. Alternativ können auch individuell insbesondere unter Verwendung einer künstlichen Intelligenz Programmbausteine 5 erstellt werden, welche die jeweilige Einzelfunktion abbilden. Das Zerlegen in Einzelfunktionen kann so lange erfolgen, bis jede erhaltene Einzelfunktion in der Datenbank 3 abgebildet ist. Es kann also Zwischenschritte geben, in denen eine komplexe Gesamtfunktion praktisch rekursiv in weniger umfangreiche einzelne Funktionen und dann weiter praktisch in Grundfunktionen zerlegt wird. Sollte sich zu einer Einzelfunktion nichts in der Datenbank 3 finden lassen, beispielsweise kein entsprechendes Dokument 4, so kann eine Fehlermeldung ausgegeben werden.

Durch die Zerlegung in Einzelfunktionen kann auf einfache Weise ein Programmcode 7 für eine komplexe Gesamtfunktion automatisiert durch eine künstliche Intelligenz generiert werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffes sind Personen mit männlicher, weiblicher oder anderer Geschlechteridentität mit umfasst.

## Patentansprüche

1. Verfahren, insbesondere computergestütztes Verfahren, zum Generieren eines Programmcodes (7) für ein System, umfassend die folgenden Schritte:
- Definieren der Gesamtfunktion des Systems, welche in einem Programmcode (7) abgebildet werden soll;
- Zerlegen der Gesamtfunktion in Einzelfunktionen unter Zugriff auf eine Datenbank (3), in welcher eine Vielzahl verschiedener Einzelfunktionen abgebildet sind;
- Zugreifen auf Programmbausteine (5), die in der Datenbank (3) hinterlegt sind und die jeweilige Einzelfunktion abbilden, oder Erstellen von Programmbausteinen (5), welche die jeweilige Einzelfunktion abbilden, insbesondere unter Verwendung einer künstlichen Intelligenz (5);
- automatisiertes Erstellen eines Programmcodes (7) für das System durch Kombinieren der jeweils den Einzelfunktionen zugeordneten Programmbausteinen (5).

2. Verfahren nach Anspruch 1, **dadurch gekennzeichnet, dass** das Definieren der Gesamtfunktion durch Eingabe eines Bedieners, insbesondere durch eine Fließtexteingabe eines Bedieners erfolgt.

3. Verfahren nach Anspruch 1 oder 2, **dadurch gekennzeichnet, dass** das Zerlegen der Gesamtfunktion in Einzelfunktionen unter Verwendung einer künstlichen Intelligenz (6) stattfindet.

4. Verfahren nach einem der vorherigen Ansprüche, **dadurch gekennzeichnet, dass** das Zerlegen der Gesamtfunktion in Einzelfunktionen in mehreren Schritten stattfindet.

5. Verfahren nach einem der vorherigen Ansprüche, **dadurch gekennzeichnet, dass** das Zerlegen der Gesamtfunktion in Einzelfunktionen so lange wiederholt wird, bis jede erhaltene Einzelfunktion in der Datenbank (3) abgebildet ist.

6. Verfahren nach einem der vorherigen Ansprüche, **dadurch gekennzeichnet, dass** die Datenbank (3) als Bibliothek aufgebaut ist, wobei jeder Einzelfunktion ein Dokument (4) zugeordnet ist.

7. Verfahren nach Anspruch 6, **dadurch gekennzeichnet, dass** jedes Dokument (4) der Datenbank (3) eine Beschreibung der jeweiligen Einzelfunktion und/oder weitere Informationen betreffend die jeweilige Einzelfunktion enthält.

8. Verfahren nach Anspruch 6 oder 7, **dadurch gekennzeichnet, dass** jedes Dokument (4) einen Programmbaustein (5) enthält, welcher die jeweilige Einzelfunktion abbildet.

9. Verfahren nach einem der Ansprüche 6 bis 8, **dadurch gekennzeichnet, dass** jedes Dokument (4) eine Benutzerfrage enthält.

10. Verfahren nach einem der vorherigen Ansprüche, **dadurch gekennzeichnet, dass** die Programmbausteine (5), welche jeweils eine Einzelfunktion abbilden, durch einen standardisierten Prompt bereitgestellt oder als ein solcher erzeugt werden, wobei der Prompt jeweils Anweisungen und eine Benutzerfrage enthält.

11. Verfahren nach einem der vorherigen Ansprüche, **dadurch gekennzeichnet, dass** die Datenbank (3) eine Vektor-Datenbank ist.

12. Verfahren nach einem der vorherigen Ansprüche, **dadurch gekennzeichnet, dass** das automatisierte Erstellen eines Programmcodes (7) unter Verwendung von künstlicher Intelligenz (6) stattfindet.

13. Computerprogrammprodukt umfassend Befehle, die bei der Ausführung des Programms durch einen Computer diesen veranlassen, das Verfahren nach einem der vorherigen Ansprüche auszuführen.

14. Computerlesbares Medium, insbesondere Speichermedium, auf welchem das Computerprogrammprodukt nach Anspruch 13 gespeichert ist.
